# EUROPÄISCHE PATENTANMELDUNG

(11) **EP 2 755 047 A1**
(43) Veröffentlichungstag der Anmeldung: **16.07.2014**
(21) Anmeldenummer: 13005926.4
(22) Anmeldetag: 19.12.2013
(51) Int. Cl.: G01S 17/00, F41G 7/00, G02B 13/04, G02B 13/06

(54) **Suchkopf für einen gelenkten Flugkörper**

(30) Priorität: 12.01.2013 DE 102013000913
(71) Anmelder: Diehl BGT Defence GmbH & Co. KG, 88662 Überlingen (DE)
(72) Erfinder: Künzner, Nicolai, DE - 88677 Markdorf (DE); Möller, Jens, DE - 88662 Überlingen (DE); Moldenhauer, Kai, DE - 78355 Hohenfels (DE); Barenz, Joachim, DE - 88662 Überlingen (DE)
(74) Vertreter: Diehl Patentabteilung

(57) **Zusammenfassung**

Die Erfindung geht aus von einem Suchkopf (2) für einen gelenkten Flugkörper (4) mit einer Abbildungsoptik (6), einem Sensor (14) und einem mit dem Sensor (14) verbundenen Auswertemittel (18), das dazu vorbereitet ist, die Richtung von in den Suchkopf (2) einfallender und auf den Sensor (14) auftreffender Laserstrahlung zu bestimmen.

Um einen kompakten Suchkopf (2) für einen gelenkten Flugkörper (4) zu erreichen, mit dem der Flugkörper (4) zuverlässig in ein beleuchtetes Ziel eingelenkt kann, wird vorgeschlagen, dass die Abbildungsoptik (6) eine Einlinsenoptik ist.

## Beschreibung

Die Erfindung betrifft einen Suchkopf für einen gelenkten Flugkörper mit einer Abbildungsoptik, einem Sensor und einem mit dem Sensor verbundenen Auswertemittel, das dazu vorbereitet ist, die Richtung von in den Suchkopf einfallender und auf den Sensor auftreffender Laserstrahlung zu bestimmen.

Bei der Bekämpfung von Zielobjekten mit ballistischer Munition, die auf große Distanzen verschossen wird, führen bereits kleinste Winkelabweichungen zu einem relativ großen Versatz, sodass die Gefahr von Kollateralschäden durch zu weit vom Zielobjekt entfernt auftreffender Munition groß ist. Zur Verbesserung der Präzision bei der Bekämpfung von Zielobjekten werden gelenkte ballistische Geschosse eingesetzt. Diese können noch während des Flugs in Richtung des Zielobjekts gelenkt werden, sodass Fehlschüsse möglichst vermieden werden.

Um das zu treffende Zielobjekt kenntlich zu machen, ist es bekannt, das Zielobjekt mit einem Laserstrahl zu beleuchten, sodass die vom Zielobjekt diffus reflektierte Laserstrahlung von einem Suchkopf des verschossenen Geschosses erkannt wird. Die reflektierte Laserstrahlung wird von einem Sensor des Suchkopfs lagesensitiv erfasst, sodass die Ablage des Zielobjekts relativ zur Geschossachse festgestellt werden kann. Daraus können wiederum zusammen mit weiteren Mess- und Kenngrößen Lenkkommandos abgeleitet werden, die von einem Stellsystem umgesetzt werden und die Flugbahn des Geschosses so formen, dass das Zielobjekt mit hoher Präzision getroffen wird.

Es ist eine Aufgabe der vorliegenden Erfindung, einen kompakten Suchkopf für einen gelenkten Flugkörper anzugeben, mit dem der Flugkörper zuverlässig in ein beleuchtetes Ziel eingelenkt kann.

Diese Aufgabe wird durch einen Suchkopf der eingangs genannten Art gelöst, bei dem die Abbildungsoptik erfindungsgemäß eine Einlinsenoptik ist. Eine Einlinsenoptik kann kompakt bauend hergestellt und robust gestaltet werden, sodass sie auch eine Abschussbeschleunigung aus beispielsweise einem Artillerierohr, unbeschadet übersteht.

Der gelenkte Flugkörper kann ein gelenktes ballistisches Geschoss für einen Verschuss aus einem Kaliber-Rohr sein und ohne einen eigenen Antrieb oder mit einem eigenen Antrieb, beispielsweise zur Reichweitenverlängerung, ausgeführt sein. Die Abbildungsoptik, der Sensor und das Auswertemittel können eine Ablagesensorik bilden, die zweckmäßigerweise starr und gehäusefest in den Flugkörper integriert ist. Sie dient zur präzisen Messung der Zielablage, sodass aus der Zielablage und zweckmäßigerweise weiteren physikalischen Größen Lenkkommandos bestimmt werden.

Die Abbildungsoptik dient zum Abbilden einer beleuchteten Fläche auf einem Zielobjekt auf den Sensor. Hierbei ist es nicht notwendig, dass die Abbildung scharf erfolgt, da eine Bildverarbeitung nicht notwendig ist. Die Abbildungsoptik ist hierbei so ausgeführt, dass die Ablage beziehungsweise der Ablageort der abgebildeten Beleuchtung auf dem Sensor von der Richtung, aus der die Beleuchtung in den Suchkopf einfällt, abhängig ist. Der Sensor ist zweckmäßigerweise ein Ablagesensor, der die Lage der Abbildung auf seiner Sensorfläche registriert. Die aus dieser Registrierung bestimmten Ablagedaten werden vom Auswertemittel zweckmäßigerweise bildverarbeitungsfrei zu Lenksignalen weiterverarbeitet.

Die Abbildungsoptik ist eine Einlinsenoptik und weist insofern nur eine einzige Linse auf, die zur alleinigen Abbildung der beleuchteten Fläche auf den Sensor vorbereitet ist. Für eine kompakte Fokussierung ist eine bikonvexe Linse vorteilhaft. Sie ist zweckmäßigerweise starr in einem gehäusefesten Bauteil des Suchkopfs eingesetzt, zweckmäßigerweise eingeklebt, und bildet die beleuchtete Fläche auf dem Sensor ab.

In einer vorteilhaften Ausführungsform der Erfindung ist die Linse der Einlinsenoptik eine bikonvexe Doppelasphäre. Hierdurch kann realisiert werden, dass die Form eines Punktbilds auf dem Sensor über das gesamte Sehfeld der Abbildungsoptik beziehungsweise des Sensors lateral in einer gewünschten Weise verläuft. Besonders vorteilhaft ist es, wenn die Form eines Punktbilds auf dem Sensor über das gesamte Sehfeld der Abbildungsoptik oder des Sensors homogen ist, also nur geringfügig variiert. Hierdurch kann die Ablageposition der Abbildung auf den Sensor unabhängig von der Richtung, in der die Strahlung in den Suchkopf einfällt, präzise erfasst werden.

Weiter ist es vorteilhaft, wenn die Linse der Einlinsenoptik eine optische Eingangsfläche mit einem Wendepunkt aufweist. Durch den Wendepunkt - im Prinzip ein Wendepunktring symmetrisch um die optische Achse - besteht die Möglichkeit, die einfallende Laserstrahlung über das gesamte Sehfeld hinweg nahezu verzeichnungsfrei abzubilden, oder noch besser: mit einer konstanten Verzeichnung abzubilden. Außerdem kann der Vorteil erreicht werden, dass eine axiale Verschiebung zwischen Fokusebene und Detektorebene nur eine geringe Auswirkung auf die resultierende Größe des Punktbilds besitzt, welches durch die Abbildung von einem sehr weit entfernten Objekt diffus reflektierte Laserstrahlung entsteht. Damit können beispielsweise mechanische Toleranzen bei der Anordnung der einzelnen Funktionselemente des Suchkopfs ausgeglichen werden.

Durch die hohe Abschussbeschleunigung kann es im gesamten Suchkopf zu mechanischen Veschiebungen einzelner Elemente des Suchkopfs zueinander kommen, die nicht unerhebliche Auswirkungen auf die optische Abbildung haben. Diesem negativen Effekt kann einerseits entgegengewirkt werden, wenn die Elemente stabil zueinander befestigt werden. Auf optischer Seite kann diesem negativen Effekt auch entgegengewirkt werden, wenn auf eine scharfe Abbildung eines Punktbilds bewusst verzichtet wird. Bei einer relativ hohen Verschmierung eines Punktbilds bereits in der optischen Achse kann eine große longitudinale Homogenität der Abbildung erreicht werden, die relativ unempfindlich gegen Lageverschiebungen z.B. der Linse gegenüber dem Sensor ist.

Von daher ist es vorteilhaft, wenn die Linse der Einlinsenoptik einen Punkt auf der optischen Achse um zumindest den 5-fachen Durchmesser einer beugungsbegrenzten Abbildung verschmiert abbildet. Die beugungsbegrenzte Abbildung kann als Airy-Scheibchen definiert werden, deren Durchmesser das 2,44-fache der Blendenzahl multipliziert mit der Wellenlänge ist. Bei einer Eingangsapertur von z.B. 20 mm und einer Brennweite von rund 10 mm beträgt die Blendenzahl etwa 0,5. Somit ist der Durchmesser der beugungsbegrenzten Abbildung bei einer Wellenlänge von 1064 nm etwa 1,2 µm. Bei einer 5-fachen Verschmierung liegt der Durchmesser des verschmierten Punktbilds bei etwa 6 µm. Zweckmäßigerweise beträgt der Durchmesser des verschmierten Punktbilds zumindest 60 µm, insbesondere zumindest 120 µm, so dass ein zumindest 50-facher Durchmesser einer beugungsbegrenzten Abbildung vorteilhaft sein kann, insbesondere sogar ein 100-facher Durchmesser.

Um die Ablage der Punktabbildung auf dem Sensor auch bei einem großen Winkel der einfallenden Strahlung zuverlässig bestimmen zu können, ist es vorteilhaft, wenn die Linse der Einlinsenoptik einen Punkt lateral über die gesamte Bildfläche des Sensors homogen verschmiert abbildet. Zweckmäßigerweise ist die homogene Verschmierung auf keinem Punkt des Sensors kleiner als der 5-fachen Durchmesser einer beugungsbegrenzten Abbildung oder, wie oben beschrieben, noch größer, Eine Homogenität kann erreicht werden, wenn der RMS Spot-Radius über den gesamten Bereich bis zu einer Abweichung von 12° zur optischen Achse weniger als den Faktor 2 vom Punkt in der optischen Achse abweicht. Weiter vorteilhaft ist ein Faktor weniger als 1,6. Zweckmäßigerweise ist die im Punktbild konzentrierte Energie nahezu radialsymmetrisch um das Abbildungszentrum verteilt.

Der Kompaktheit des Suchkopfes verbunden mit einer stets präzisen Bestimmbarkeit der Ablage ist es außerdem zuträglich, wenn die Linse der Einlinsenoptik eine konvexe Eingangsfläche mit einem Radius aufweist, der kleiner als die Dicke der Linse ist. Vorteilhafterweise gilt dies auch für die Ausgangsfläche der Linse, also diejenige Fläche, die zum Sensor hinweist.

Mit gleichem Vorteil weist die Linse der Einlinsenoptik eine Dicke auf, die zumindest zwei Drittel der Eingangsapertur der Linse beträgt. Auch hierdurch kann ein sehr kompakter Aufbau des Suchkopfs beziehungsweise der Abbildungsoptik erreicht werden, verbunden mit einer großen Toleranz von Fertigungsmaßen.

Die Linse ist zweckmäßigerweise im infraroten Spektralbereich, insbesondere bei 1000 nm ±200 nm, transmissiv. Außerdem ist es vorteilhaft, wenn ihr Brechungsindex bei einer Änderung der Temperatur nur geringfügig variabel ist und das Punktbild somit athermale Eigenschaften besitzt. Dies kann durch ein geeignetes Linsenmaterial erreicht werden, wobei Quarz (SiO₂) ein besonders geeignetes Material ist.

Um auch größere Bahnkorrekturen des Flugkörpers zu gestatten, ist die Abbildungsoptik vorteilhafterweise eine Weitwinkeloptik, insbesondere mit einem Gesichtsfeld von zumindest ±10 Grad, insbesondere ±15 Grad, zur optischen Achse.

Durch seine Kompaktheit ist der Suchkopf besonders geeignet für seine Verwendung in antriebsloser oder angetriebener Lenkmunition, die für einen Verschuss aus einem Kaliber-Rohr vorbereitet ist. Hierzu ist die Abbildungsoptik zweckmäßigerweise für einen Betrieb nach einer Abschussbeschleunigung von zumindest 1000 g ausgeführt, zweckmäßigerweise zumindest 50.000 g. Die Lenkmunition kann ein ballistisches Geschoss sein, das angetrieben oder antriebsfrei ist. Unter einem Kaliber-Rohr kann ein Abschussrohr verstanden werden, dessen Rohrdurchmesser so gewählt ist, dass das Geschoss über seinen gesamten Umfang mit einem Abstand von weniger als 5 mm von der Rohrinnenseite beabstandet ist.

Bei einer Abschussbeschleunigung wirken enorme Kräfte entgegen der Flugrichtung im Suchkopf. Zur stabilen Fassung der Linse der Einlinsenoptik ist es vorteilhaft, wenn diese in einer konischen Fassung gelagert ist. Die Konizität sollte hierbei nicht zu klein gewählt sein, wobei eine konische Radiusverkleinerung von zumindest 10 Prozent, insbesondere zumindest 15 Prozent von der vorderen Lagerkante bis zur hinteren Lagerkante der Linse vorteilhaft ist.

Weitere Vorteile ergeben sich aus der folgenden Zeichnungsbeschreibung. In der Zeichnung sind Ausführungsbeispiele der Erfindung dargestellt. Die Zeichnung und die Beschreibung enthalten zahlreiche Merkmale in Kombination, die der Fachmann zweckmäßigerweise auch einzeln betrachten und zu sinnvollen weiteren Kombinationen zusammenfassen wird.

Es zeigen:
- FIG 1: einen Ausschnitt aus einem Suchkopf für ballistische, eigenantriebsfreie Munition und
- FIG 2: die Linse des Suchkopfs für einen Suchkopf wie aus FIG 1 in einer Schnittdarstellung.

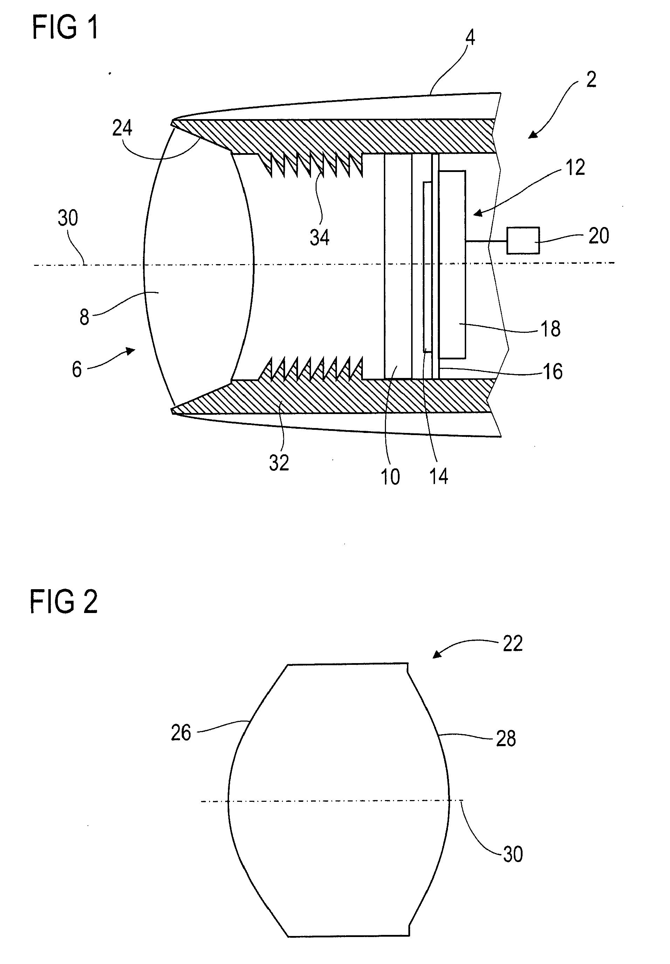

FIG 1 zeigt einen Ausschnitt aus einem Suchkopf 2 in einem nur angedeuteten Flugkörper 4, der als ballistisches und antriebsloses Geschoss ausgeführt ist. Der Flugkörper 4 ist gelenkte Kalibermunition, die für einen Abschuss aus einem Rohr, beispielsweise einem Artelleriegeschütz, vorbereitet ist. Der Suchkopf 2 ist mit einer Abbildungsoptik 6 ausgestattet, die eine Linse 8 aus künstlich hergestelltem Quarz (SiO₂) aufweist, die am vorderen Ende des Suchkopfs 2, also in Flugrichtung des Flugkörpers 4 ausgerichtet, angeordnet ist. Weiter enthält die Abbildungsoptik 6 einen Spektralfilter 10 vor einer Sensoreinheit 12, die einen Sensor 14 auf einer Trägerscheibe 16 und eine Auswerteeinheit 18 aufweist, die ebenfalls an der Trägerscheibe 16 befestigt ist. Die Auswerteeinheit 18 kann mit einer weiteren Auswerteeinheit 20 an einem anderen Ort des Suchkopfs 2 oder des Flugkörpers 4 verbunden sein und entweder alleine oder mit der Auswerteeinheit 20 ein Auswertemittel bilden, das zur Generierung von Lenksignalen zum Steuern eines Flugs des Flugkörpers 4 vorbereitet ist.

Eine Linse 22 für einen Suchkopf 2, wie er in FIG 1 dargestellt ist, ist in FIG 2 im Querschnitt wiedergegeben. Die Linse 22 kann die Linse 8 ersetzen und so ein Teil des Suchkopfs 2 aus FIG 1 werden. Während die Linse 8 in einer konischen Fassung 24 gehalten ist, wurde bei der Darstellung der Linse 22 auf die ebenfalls vorhandene Konizität verzichtet, sodass eingangsseitig nur die optisch aktive Fläche der Eingangsfläche 26 der Linse 22 dargestellt ist. Radial darüber hinaus kann sie - wie die Linse 8 - weitergeführt und nach hinten, also zur Ausgangsfläche 28 hin, konisch verjüngend geformt sein, sodass sie auch in die Fassung 24 des Suchkopfs 2 passt.

Die Linse 22 ist als bikonvexe Doppelasphäre aus Quarzmaterial ausgeführt. Die Dicke der Linse beträgt im Zentrum, also entlang der optischen Achse 30, 16,5 cm. Die Linse 22 ist als dicke Linse ausgeführt, deren Dicke mehr als dreiviertel der Eingangsapertur von rund 21 mm der Eingangsfläche 26 beträgt. Der Krümmungsradius der Eingangsfläche 26 ist geringer als die Dicke der Linse 22. Das gleiche gilt für den Krümmungsradius der Ausgangsfläche 28, wobei die Radien wegen der asphärischen Geometrie nicht über die gesamten Flächen 26, 28, sondern an der optischen Achse 30 zu sehen sind. Die Eingangsfläche 26 ist mit einem Wendepunkt im äußersten Viertel der optisch aktiven Fläche ausgeführt, wobei der Wendepunkt streng geometrisch genommen einen Wendekreis um die optische Achse 30 ist.

Der Suchkopf 2 ist so ausgeführt, dass er einer Abschussbeschleunigung von 50.000 g standhält. Hierzu ist die Linse 8, 22 an ihrer Umfangsfläche konisch ausgeführt, sodass der vordere Durchmesser etwa 25 mm und der hintere Durchmesser etwa 21 mm beträgt. Der Radius nimmt insofern entlang der an der Fassung 24 anliegenden Linsenfläche um etwa 20 % von vorne nach hinten ab. Die Linse ist mit ihrer äußeren Umfangfläche in die Fassung 24 eingeklebt und hierdurch stoffschlüssig mit einem Gehäuse 32 des Suchkopfs 2 verbunden. Beim Auftreten großer Beschleunigung wird die Linse 8, 22 großflächig gegen die Fassung 24 gedrückt und die von ihr verursachten Trägheitskräfte werden besonders gut aufgenommen und die auftretenden Druckbelastungen werden gering gehalten.

Die Linse 8, 22 ist mit einer Antireflexions-Beschichtung für die Anwendungswellenlänge von 1064 nm eines Markierlasers versehen, um eine hohe Transmission für die Anwendungswellenlänge zu gewährleisten. Optional kann sie mit einer SiO₂-Schutzschicht beschichtet sein, um einen guten Schutz gegen Umwelteinflüsse zu erreichen. Die Schutzschicht kann eine diamantähnliche Beschichtung sein. Durch eine Oberflächenbeschichtung können Abrasion und Beschädigungen verringert werden, wenn sich der Suchkopf 2 auf einen ballistischen oder angetriebenen Flug mit Unterschall- oder Überschallgeschwindigkeit durch die Atmosphäre befindet. Die Beschichtung ist zweckmäßigerweise außerdem so ausgeführt, dass beim Ablösen einer Schutzhaube, die die Linse 8 während eines ersten Teil des Flugs verdeckt und somit schützt, mittels pyrotechnischem Element die dabei entstehenden Reaktionsprodukte nahezu keine Beeinflussung der Abbildungseigenschaften verursachen.

Auf der Innenseite des Suchkopfs 2 ist das den Strahlengang umgebende Element, im gezeigten Ausführungsbeispiel das Gehäuse 32 des Suchkopfs 2, mit einer geometrischen Struktur 34 zur Unterdrückung von Streulichtanteilen versehen, die über eine Länge von zumindest 20 mm eine Periodizität aufweist. Zudem ist die dem Strahlengang zugewandte Oberfläche mit einem schwarzen Lack versehen.

Zum Herausfiltern von störender Strahlung umfasst der Suchkopf 2 in seinem Strahlengang den Spektralfilter 10, der in der Anwendungswellenlänge, beispielsweise 1064 nm, transmissiv ist. Der Spektralfilter 10 kann aus einer Multischichtstruktur mit mehr als 80 Schichten von Materialien unterschiedlichen Brechungsindizes bestehen, wobei der Spektralfilter 10 eine mittlere Transmission von über 90 % bei der Anwendungswellenlänge unter Einfallswinkeln von bis zu 20°, insbesondere bis zu 35° zur optischen Achse 30 besitzt.

Der Sensor 14 ist in dem gezeigten Ausführungsbeispiel eine Lateraleffekt-Photodiode aus Silizium, die für den Einsatz der Anwendungswellenlänge, in diesem Fall 1064 nm, optimiert ist. Die sensornahe Elektronik der Auswerteeinheit 18 befindet sich auf der dem Sensor 14 gegenüberliegenden Seite der keramischen Trägerscheibe 16, auf der der Sensor 14, wie auch die Auswerteeinheit 18, durch Kleben aufgebracht ist.

Durch das sehr kompakte Design und den geringen Abstand zwischen Linse 8, 22 und Sensor 14 von weniger als 5 cm bei einer Eingangsapertur von mehr als 2 cm erzielt die Abbildungsoptik 6 ein sehr großes Sehfeld, in diesem Beispiel von über ±10 Grad zur optischen Achse 30, wobei ±12,5 Grad zu erreichen sind.

Durch die Form und die Brechkraft der Linse 8, 22 wird erreicht, dass ein in der optischen Achse 30 liegender Punkt nicht scharf auf dem Sensor 14 abgebildet wird, sondern als ein Fleck. Vorteilhafte Unschärfen sind hierbei so, dass der Fleck einen Durchmesser zwischen 50 µm und 500 µm, insbesondere zwischen 100 µm und 200 µm. Die Form des Flecks ist im Wesentlichen rund, wobei sich diese Form auch bei einem Auswandern des Punkts aus der optischen Achse bis zu ±12,5 Grad kaum ändert, sowohl in der Form als auch in der Größe.

Durch den Wendepunkt der Eingangsfläche 26 wird die unscharfe Fokusierung des Punktbilds an den Randbereichen weiter hinten erzeugt, es tritt also eine homogene Verschmierung des Flecks in der Tiefe auf. Durch die Kombination von konvexer Linsenform radial innen der Eingangsfläche 26 und die Konkavlinsenform radial weiter außen der Eingangsfläche 26 wird auch für große Randfeldwinkel die Homogenisierung der Abbildungsfehler in lateraler Richtung erreicht. Durch diese Homogenisierung des sphärischen Abbildungsfehlers durch die Linsenform wird erreicht, dass die Unschärfe der Abbildung über die gesamte Sensorfläche im Wesentlichen gleich bleibt, sodass die Form und die Fläche des Flecks wenig varüeren. Der RMS Spot-Radius variiert um weniger als den Faktor 1,5 bei Verschiebung seiner Lage aus der optischen Achse 30 bis zum Randbereich, also 12,5° angewinkelt zur optischen Achse 30.

### Bezugszeichenliste

- 2: Suchkopf
- 4: Flugkörper
- 6: Abbildungsoptik
- 8: Linse
- 10: Spektralfilter
- 12: Sensoreinheit
- 14: Sensor
- 16: Trägerscheibe
- 18: Auswerteeinheit
- 20: Auswerteeinheit
- 22: Linse
- 24: Fassung
- 26: Eingangsfläche
- 28: Ausgangsfläche
- 30: optische Achse
- 32: Gehäuse
- 34: Struktur

## Patentansprüche

1. Suchkopf (2) für einen gelenkten Flugkörper (4) mit einer Abbildungsoptik (6), einem Sensor (14) und einem mit dem Sensor (14) verbundenen Auswertemittel (18), das dazu vorbereitet ist, die Richtung von in den Suchkopf (2) einfallender und auf den Sensor (14) auftreffender Laserstrahlung zu bestimmen,
**dadurch gekennzeichnet,**
**dass** die Abbildungsoptik (6) eine Einlinsenoptik ist.

2. Suchkopf (2) nach Anspruch 1,
**dadurch gekennzeichnet,**
**dass** die Linse (8, 22) der Einlinsenoptik eine bikonvexe Doppelasphäre ist.

3. Suchkopf (2) nach Anspruch 1 oder 2,
**dadurch gekennzeichnet,**
**dass** die Linse (22) der Einlinsenoptik eine optische Eingangsfläche mit einem Wendepunkt aufweist.

4. Suchkopf (2) nach einem der vorhergehenden Ansprüche,
**dadurch gekennzeichnet,**
**dass** die Linse (8, 22) der Einlinsenoptik einen Punkt auf der optischen Achse um zumindest den 5-fachen Durchmesser einer beugungsbegrenzten Abbildung verschmiert abbildet.

5. Suchkopf (2) nach einem der vorhergehenden Ansprüche,
**dadurch gekennzeichnet,**
**dass** die Linse (8, 22) der Einlinsenoptik einen Punkt lateral über die gesamte Bildfläche des Sensors (14) homogen verschmiert abbildet.

6. Suchkopf (2) nach einem der vorhergehenden Ansprüche,
**dadurch gekennzeichnet,**
**dass** die Linse (22) der Einlinsenoptik eine konvexe Eingangsfläche mit einem Radius aufweist, der kleiner als die Dicke der Linse (22) ist.

7. Suchkopf (2) nach einem der vorhergehenden Ansprüche,
**dadurch gekennzeichnet,**
**dass** die Linse (22) der Einlinsenoptik eine Dicke aufweist, die zumindest 2/3 der Eingangsapertur der Linse (22) beträgt.

8. Suchkopf (2) nach einem der vorhergehenden Ansprüche,
**dadurch gekennzeichnet,**
**dass** die Linse (22) der Einlinsenoptik eine Quarzlinse ist.

9. Suchkopf (2) nach einem der vorhergehenden Ansprüche,
**dadurch gekennzeichnet,**
**dass** die Abbildungsoptik (6) eine Weitwinkeloptik mit einem Gesichtsfeld von zumindest ±10° ist.

10. Suchkopf (2) nach einem der vorhergehenden Ansprüche,
**dadurch gekennzeichnet,**
**dass** der Flugkörper (4) antriebslose Lenkmunition für einen Verschuss aus einem Rohr ist und die Abbildungsoptik für einen Betrieb nach einer Abschussbeschleunigung von zumindest 10.000 g ausgeführt ist.

11. Suchkopf (2) nach einem der vorhergehenden Ansprüche,
**dadurch gekennzeichnet,**
**dass** die Linse (8, 22) der Einlinsenoptik in einer konischen Fassung gelagert ist.
